(19) **Europäisches Patentamt**

**European Patent Office**

**Office européen des brevets**

(11) Veröffentlichungsnummer: **0 277 595 B1**

(12) ## EUROPÄISCHE PATENTSCHRIFT

(45) Veröffentlichungstag der Patentschrift: **17.06.92**

(21) Anmeldenummer: **88101257.9**

(22) Anmeldetag: **28.01.88**

(51) Int. Cl.⁵: **B62B 1/14**, A63B 55/08, A63C 11/02

(54) **Transportvorrichtung für Sportausrüstungen.**

(30) Priorität: **29.01.87 DE 3702649**
**07.09.87 DE 3729944**
**05.11.87 DE 3737587**

(43) Veröffentlichungstag der Anmeldung:
**10.08.88 Patentblatt 88/32**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI NL SE**

(56) Entgegenhaltungen:
**AU-B- 558 965**
**US-A- 4 114 915**

(73) Patentinhaber: **Schmidt, Peter**
**Ziegeleiweg 20**
**W-5000 Köln 90(DE)**

(72) Erfinder: **Schmidt, Peter**
**Ziegeleiweg 20**
**W-5000 Köln 90(DE)**

(74) Vertreter: **Feldkamp, Rainer, Dipl.-Ing. Patent-**
**anwälte Wallach, Koch, Dr. Haibach, Feld-**
**kamp**
**P.O. Box 121120**
**W-8000 München 12(DE)**

## Beschreibung

Die Erfindung bezieht sich auf eine Transportvorrichtung für Sportausrüstungen der im Oberbegriff des Patentanspruchs 1 genannten Art.

Bei der Ausübung vieler Sportarten ist es erforderlich, schwere und/oder sperrige Sportausrüstungsteile über längere Strecken zu transportieren. Um den Transport dieser Sportausrüstungen zu erleichtern, wurden vielfältige Tranportvorrichtungen entwickelt, die zumeist für eine bestimmte Sportart speziel ausgebildet sind.

So sind beispielsweise für den Transport von Skiern Transportvorrichtungen bekannt (DE-OS 34 39 278), die aus einem Stützglied bestehen, in das die Enden der flach aufeinandergelegten Skier einklemmbar sind. Das Stützglied weist auf einer Seite Gleitkufen und auf der gegenüberliegenden Seite Rollen auf, sodaß die Enden der Skier auf glattem Boden gleiten oder rollen können.

Es ist weiterhin eine Transportvorrichtung für Skiausrüstungen bekannt (US-PS 4 358 137), bei der der Transportbehälter durch ein mit zwei Rädern versehenes Fahrgestell gebildet ist, an dem das untere Ende eines zusammenrollbaren Transportsackes befestigt ist, der entlang einer Längsseite durch einen Reißverschluß verschließbar ist. An dem Transportsack sind Tragschlaufen befestigt, die es ermöglichen, daß der Benutzer das Fahrgestell zieht oder schiebt. Das Fahrgestell weist weiterhin eine Einsteköffnung für die unteren Enden der Skier auf, in die diese lose einsteckbar sind und insgesammt von dem Transportsack umschlossen werden, in dem auch die Skischuhe und ggf. die Skistöcke angeordnet werden können. Die Herstellung dieser bekannten Transportvorrichtung ist relativ aufwendig und weiterhin ist die Bewegung dieser bekannten Transportvorrichtung über eine Bodenfläche relativ schwierig, da die an dem Transportsack befestigten Haltegriffe keine starre Verbindung mit dem Fahrgestell haben. Außerdem ist eine Bewegung dieser Transportvorrichtung auf weichem Schnee nicht möglich, da die Räder in diesem Fall einsinken und eine Bewegung behindern.

Es ist weiterhin eine Transportvorrichtung der eingangs genannten Art bekannt (DE-OS 25 28 968), bei dem eine Zug- oder Schubstange von ringförmigen Halterungselementen für die Golfschläger umgeben ist und an ihrem unteren Ende abnehmbare Räder zum Rollen der Transportvorrichtung trägt. Obwohl auch diese Transportvorrichtung nach Abnehmen der Räder und eines Teils der Zugstange zusammenlegbar ist, nimmt sie einen erheblichen Raum ein, was um so erschwerender ist, als diese Transportvorrichtung ebenso wie alle vorstehend beschriebenen Transportvorrichtungen nur für eine spezielle Sportart verwendbar ist und damit bei Ausübung verschiedener Sportarten mehrere verschiedene Transportvorrichtungen nebeneinander vorhanden sein müssen.

Der Erfindung liegt die Aufgabe zugrunde, eine Transportvorrichtung der eingangs genannten Art zu schaffen, die bei einfachem Aufbau einen bequemen Transport von vielfältigen Arten von Sportausrüstungen wie zum Beispiel Skischuhen, Skiern und Skistöcken sowie Golfschlägern Angelruten und anderen Sportausrüstungsteilen oder Camping- und Wassersportausrüstungen ermöglicht.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Transportvorrichtung ergibt sich eine bequeme und universelle Handhabung zum Transport verschiedenster Arten von Sportausrüstungen und -geräten, wo bei entweder in die Haterungskanäle eingesteckte langgestreckte Sportausrüstungsteile selbst als Zug- oder Schubstange dienen können oder, falls solche langgestreckten Sportausrüstungsteile nicht vorhanden sind, bei Nichtgebrauch in den Halterungskanälen angeordnete Zugstangenabschnitte zusammensteckbar und mit dem Transportbehälter verbindbar sind, um die Zugstange zu bilden.

Durch die unter einem Winkel von 90 Grad oder weniger gegeneinander geneigten Bodenflächen ist es möglich, den Transportbehälter auf einer Bodenfläche abzustellen, worauf sich die andere Bodenfläche im wesentlichen senkrecht erstreckt und Sportausrüstungteile, die in den dieser senkrechtstehenden Bodenfläche benachbarten Halterungskanal eingesteckt sind, senkrecht stehen, ohne daß eine Kippgefahr des Transportbehälters besteht. Dies gilt insbesondere dann, wenn in dem Transportbehälter schwere Sportausrüstungsteile, wie zum Beispiel Skischuhe angeordnet sind, da hierbei der Schwerpunkt der Transportvorrichtung einschließlich der gesamten Sportausrüstungsteile sehr niedrig liegt. Durch die Form der Bodenflächen und der diese miteinander verbindenden Verbindungsfläche ist es möglich, den Transportbehälter sowohl auf festem Untergrund als auch auf weichem Untergrund beispielsweise Schnee zu bewegen, da die durch die Verbindungsfläche und/oder die Bodenflächen gebildete Unterseite des Transportbehälters eine Gleitkufe bildet.

Durch die Ausgestaltung des Transportbehälters in Form von zwei identischen Halbschalen, die durch Verriegelungseinrichtungen miteinander verbindbar sind, wird eine sehr einfache Herstellung beispielsweise aus Kunststoffmaterial möglich, wobei ggf. Dichtungselemente entlang der Kanten der beiden Halbschalen vorgesehen sind. Auf diese Weise werden die in dem Transportbehälter angeordneten Sportausrüstungsteile sicher gegen das Eindringen von Schmutz und Feuchtigkeit geschützt. Der Transportbehälter kann weiterhin wie ein Transportkoffer verwendet werden, wenn die Räder enternt werden, sodaß sich eine sehr bequeme Handhabung ergibt.

Bei Verwendung von langgestreckten Sportausrüstungsteilen als Schub- oder Zugstange für den Transportbehälter werden diese Sportausrüstungsteile gemäß einer bevorzugten Ausgestaltung der Erfindung so in die Halterungskanäle eingesteckt, daß sie auf den gegenüberliegenden Seiten einer Spreizeinrichtung liegen, die oberhalb der Einstecköffnung am oberen Ende der Halterungskanäle angeordnet ist. Diese Spreizeinrichtung ist bestrebt, die beiden Sportausrüstungsteile, wie z.B. Skier auseinander zu spreizen, insbesondere deshalb, weil der Halterungskanal leicht konisch zu seinem unteren Ende hin zusammenlaufend ausgebildet ist. Dieser voneinander fort gerichteten Bewegung der freien Enden der Skier wird mit Hilfe eines Haltegriffes entgegengewirkt, der am freien Ende der in den Transportbehälter eingesteckten Skier an einer für den Benutzer bequemen Stelle befestigt ist, diese zusammenhält und die Bewegung des Transportbehälters und der Skier erleichtert. Durch das Zusammenhalten bzw. Zusammenziehen der freien Enden der Skier werden diese um den Mittelteil des Traggriffes verschwenkt, sodaß die in dem Halterungskanal angeordneten unteren Enden der Skier gegen die Wandung des Halterungskanals gepreßt und fest in diesem verankert werden. Der Haltegriff kann gleichzeitig zur Befestigung von Skistöcken zusammen mit den Skiern dienen.

Diese Verankerung und Halterung der Skier an der Spreizeinrichtung kann noch dadurch verbessert werden, daß der Mittelteil der stabförmigen Spreizeinrichtung zur Mitte hin verjüngt ist. Dadurch werden die Skier zentriert und jede seitlich gerichtete Bewegung der Skier gegenüber dem Mittelteil der Spreizeinrichtung sicher vermieden.

Durch die erfindungsgemäße Verankerung der hinteren Enden der Skier oder anderer langgestreckter Sportausrüstungsteile an dem Transportbehälter ergibt sich eine sehr feste und starre Verbindung dieser Sportausrüstungsteile mit den Transportbehälter, sodaß eine bequeme Handhabung dieses Transportbehälters ermöglicht wird, ohne daß getrennte Zug- oder Schubeinrichtungen erforderlich sind.

Sollte eine vorgegebene Sportausrüstung keine langgestreckten Sportausrüstungsteile einschließen, so ist es weiterhin möglich, eine Zug- oder Schubstange aus zwei im wesentlichen identischen Zugstangenabschnitten zu bilden, die über an einem Ende angeordnete Rasteinrichtungen teleskopartig miteinander verbindbar sind, während sie an ihrem anderen Ende Griffe tragen, die eine durchgehende unrunde Bohrung aufweisen, deren Form und Abmessungen an die Querschnittsform der Spreizeinrichtungen angepaßt sind. Nach öffnen der Halbschalen kann damit der Griff eines Zugstangenabschnittes auf die Spreizeinrichtung aufgeschoben und beim Schließen des Transportbehälters auf dieser Spreizeinrichtung verriegelt werden, sodaß sich eine einfache Befestigung dieser Zugstange an den Transportbehälter ergibt. Bei Nichtgebrauch dieser Zug- oder Schubstange können die beiden Zugstangenabschnitte in die Halterungskanäle eingelegt und ebenfalls durch aufschieben der Griffe auf die Spreizeinrichtung in diesen Halterungskanälen festgelegt werden.

Wenn die verwendeten Sportausrüstungen eine Vielzahl von langgestreckten sperrigen Sportausrüstungsteilen umfassen, wie zum Beispiel Golfschläger oder dergleichen, die nicht alle in den Halterungskanälen Platz finden, so ist gemäß einer vorteilhaften Ausgestaltung der Erfindung vorgesehen, in der Deckfläche des Transportbehälters Öffnungen vorzusehen, in die auswechselbare Haltevorrichtungen zur Aufnahme dieser Sportausrüstungsteile und/oder von Kleinteilen einsetzbar sind. Diese Haltevorrichtungen können beispielsweise im Fall von Golfschlägern durch einen Köcher für Golfschläger gebildet sein, wobei es weiterhin möglich ist, in eine weitere derartige Öffnung einen Behälter für Kleinteile einzusetzen, der durch Klappen verschließbar ist.

Durch diese zusätzlichen Öffnungen in der Deckfläche des Transportbehälters wird damit eine weitere Verbesserung der universellen Einsetzbarkeit des Transportbehälters erreicht. Bei Nichtgebrauch dieser Öffnungen können diese selbstverständlich durch Klappen verschlossen sein.

Diese Klappen können gemäß einer bevorzugten Ausführungsform der Erfindung gleichzeitig durch Verschlußeinrichtungen verriegelt werden, die zum Verriegeln der beiden Halbschalen des Transportbehälters miteinander vorgesehen sind.

Die Erfindung wird im folgenden anhand von in der Zeichnung dargestellten Ausführungsbeispielen noch näher erläutert.

In der Zeichnung zeigen:

Fig. 1 eine schematische Ansicht einer Ausführungsform der Transportvorrichtung, wobei als Ausführungsbeispiel der Transport einer Skiausrüstung dargestellt ist

Fig. 2 eine Längsschnittansicht durch den Transportbehälter entlang der Linie II-II nach Fig. 4

Fig. 3 eine Draufsicht auf den Transportbehälter entlang der Linie Z nach Fig. 1

Fig. 4 eine Rückansicht des Transportbehälters entlang der Linie Y nach Fig. 1

Fig. 5 eine Querschnittsansicht des Transportbehälters entlang der Linie V-V nach Fig. 1

Fig. 6 eine der Fig. 2 entsprechende Ansicht, die in der linken Hälfte einen eingesteckten Zugstangenabschnitt und in der rechten Hälfte die beiden zusammengesteckten und auf die Spreizeinrichtung aufgesteckten Zugstangenabschnitte zeigt

Fig. 7a,7b eine Ansicht der beiden ineinander steckbaren Zugstangenabschnitte

Fig 8. eine der Fig. 2 entsprechende Schnittansicht des Transportbehälters mit eingestecktem Köcher für Golfausrüstungen und dergleichen

Fig. 9 eine der Fig. 4 entsprechende Ansicht des Transportbehälters mit eingestecktem Köcher.

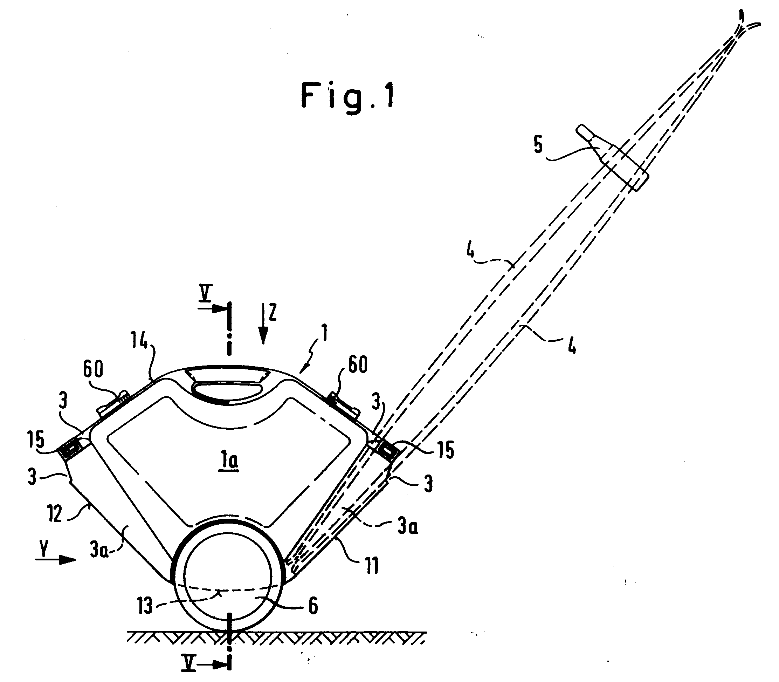

In den Fig. 1 - 5 ist eine Ausführungsform der Transportvorrichtung zur Anwendung dieser beim Transport von Skiausrüstungen gezeigt beschrieben wird. Es ist ohne weiteres erkennbar, daß die Bezugnahme auf die Skier in gleicher Weise durch die Bezugnahme auf andere langgestreckte Sportausrüstungsteile ersetzt werden könnte.

Wie dies aus den Fig 1 - 5 zu erkennen ist, weist die Transportvorrichtung einen Transportbehälter (1) auf, der durch zwei identische Halbschalen (1a,1b) gebildet ist, sodaß der Transportbehälter längs seiner Mittelebene, das heißt in der Zeichenebene nach Fig. 1 geteilt ist, wobei diese Längsmittelebene seiner Bewegungsrichtung entspricht. Die beiden Halbschalen können mit Hilfe von Verriegelungsteilen aneinander befestigt werden, wie dies weiter unten noch näher erläutert wird.

Der Transportbehälter (1) weist zwei unter einem Winkel von weniger als 90 Grad gegeneinander geneigte Bodenflächen (11,12) auf, die über eine abgerundete untere Verbindungsfläche (13) miteinander verbunden sind.

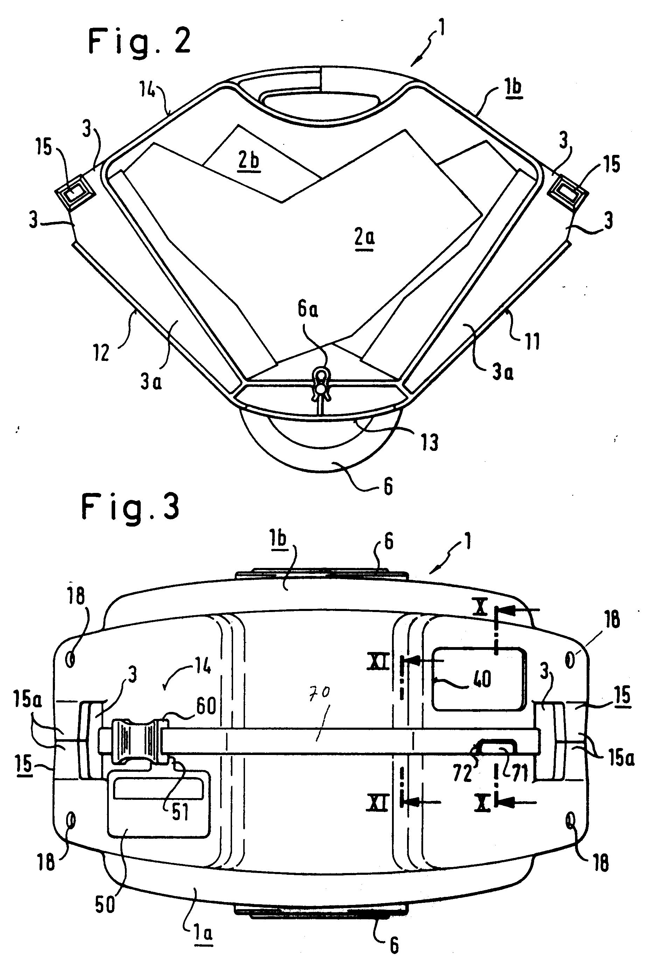

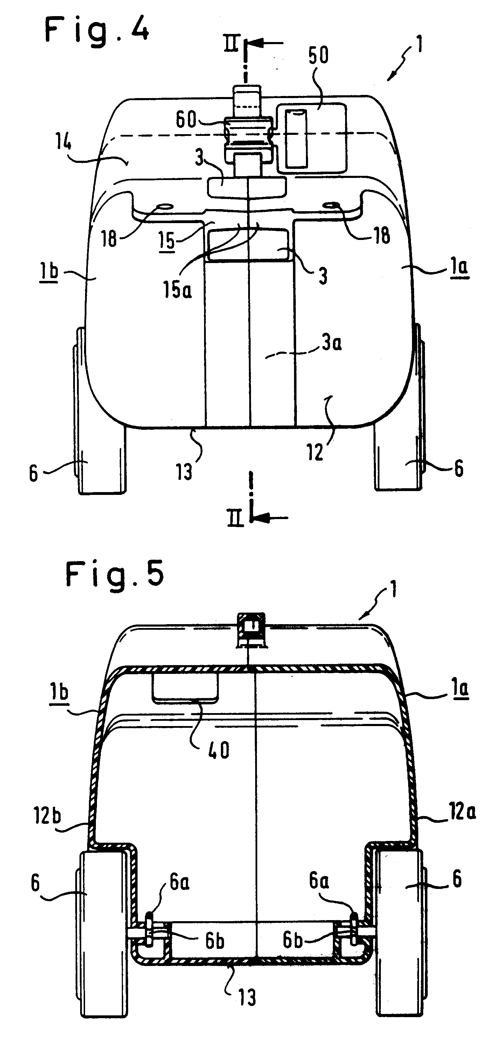

Die durch die Bodenflächen (11,12) und die Verbindungsfläche (13) gebildete Unterseite des Transportbehälter (1) bildet eine Gleitkufe, die ein leichtes Gleiten des Transportbehälters auf Schnee, weichem Sand oder dergleichen ermöglicht. Weiterhin sind an dem Transportbehälter zwei seitlich angebrachte Räder vorgesehen, die gem. Fig. 2 und 5 über Rasteinrichtungen (6a) lösbar an dem Transportbehälter (1) befestigt sind. Diese Rasteinrichtungen können durch Federbügel gebildet sein, die in Ringnuten in Achsen (6b) der Räder (6) eingreifen, die von den Seitenflächen (12a,12b) des Transportbehälters aus in Bohrungen in diesen Seitenflächen eingesteckt sind. Die Räder verhindern in hügeligem Gelände ein seitliches Wegrutschen des Transportbehälters bei weichem Untergrund, da sie in diesem Fall in diesen Untergrund einsinken und die Unterseite des Transportbehälters als Gleitfläche wirkt. Die Räder können in Aufnahmevorrichtungen im Inneren des Transportbehälters aufbewahrt werden, sodaß der Transportbehälter nach Art eines üblichen Koffers transportiert werden kann.

Wie dies insbesondere aus Fig. 2 zu erkennen ist, sind benachbart zu den Bodenwänden (11,12) des Transportbehälters Halterungskanäle (3a) ausgebildet, in die Skier (4) (Fig.1) oder andere langgestreckte Sportausrüstungsteile einsteckbar sind. Wie aus den Fig. 2 und 3 zu erkennen ist, münden diese Halterungskanäle (3a) in Einstecköffnungen (3) im Bereich der Deckfläche (14) des Transportbehälters.

Diese Einstecköffnung wird durch eine senkrecht zur Längsmittelebene des Transportbehälters (1) verlaufende Spreizeinrichtung (15) durchquert, die dazu dient, zwei in den Halterungskanal (3a) eingesteckte Sportausrüstungsteile, wie zum Beispiel die Skier (4), voneinander zu trennen und auseinanderzuspreizen, wobei dieses Auseinanderspreizen noch durch die konisch nach unten hin zusammenlaufende Form des Halterungskanals (3a) unterstützt wird. Dieser Spreizbewegung der Skier (4) wird jedoch durch einen Haltegriff (5) entgegengewirkt, der die beiden Skier zusammenhält und im Ergebnis ein Verschwenken der beiden aneinander liegenden Skier um die Spreizeinrichtung (15) herum hervorruft. Hierdurch werden die in dem Halterungskanal (3a) befindlichen Enden der Skier auseinandergespreizt, sodaß sich diese fest an die obere bzw. untere Begrenzungswand des Halterungskanals (3a) anlegen und sich eine feste Halterung der Skier in dem Halterungskanal (3a) ergibt. Die exakte Halterung der Skier in dem Halterungskanal bzw. an der Spreizeinrichtung (15) kann dadurch verbessert werden, daß die Spreizeinrichtungen (15) in der aus Fig. 3 erkennbaren Weise in Richtung auf ihren Mittelteil (15a) verjüngt ausgebildet sind, sodaß sich die Skier entlang dieses Mittelteils zentrieren Hierdurch ergibt sich eine sehr exakte Halterung und Führung der Skier oder anderer Sportausrüstungsteile in dem Halterungskanal und die Skier oder anderen langgestreckten Sportausrüstungsteile können dann die Aufgabe einer Zug oder Schubstange für die Bewegung des Transportbehälters über dem Boden übernehmen.

Bei Verwendung für den Transport von Skiausrüstungen sind die beiden Skischuhe (2a,2b) gemäß Fig. 1 nebeneinanderliegend in dem Transportbehälter (1) angeordnet, sodaß sich ein relativ niedriger Schwerpunkt ergibt und es möglich ist, den Transportbehälter mit senkrecht stehenden Skiern auf einer der unter einem Winkel zueinander verlaufenden Bodenflächen (11,12) abzustellen.

Der Haltegriff (5) kann weiterhin zur Halterung des oberen Endes von (nicht dargestellten) Skistöcken verwendet werden, die mit ihren Spitzen in die Öffnungen (18) der Deckfläche (14) gemäß Fig 3 eingesteckt werden.

Der Haltegriff (5) kann an beliebiger Stelle der Skier (4) oder anderer Sportausrüstungteile wie z.B. Angelruten, Speere oder dergleichen angeordnet werden, wodurch eine Anpassung an die Größe des Benutzers erreicht werden kann.

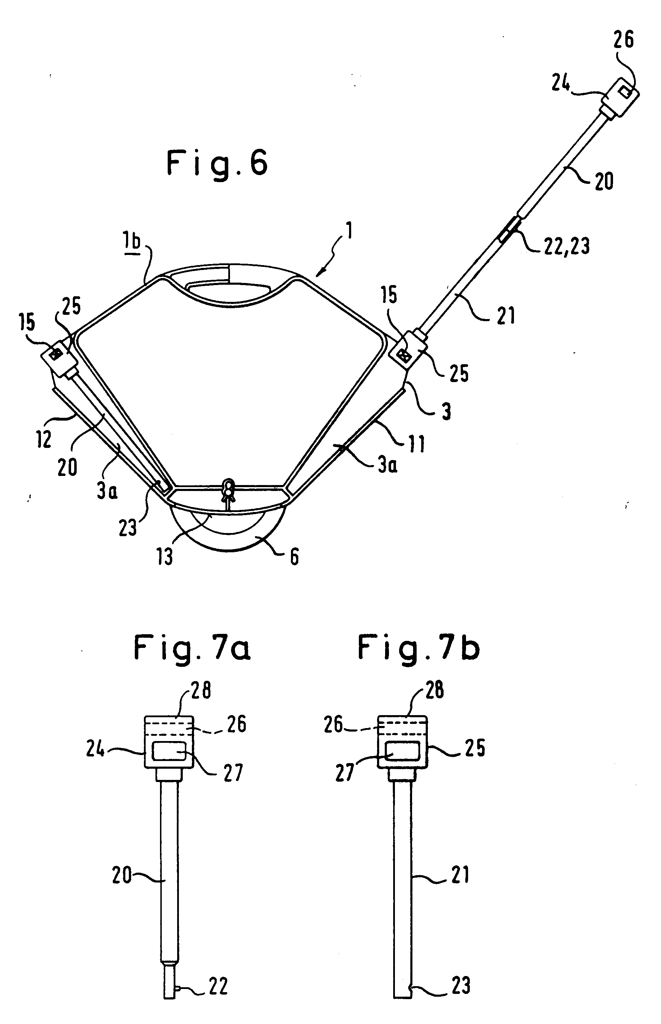

Falls die zu transportierende Sportausrüstung derartige langgestreckte Sportausrüstungsteile nicht einschließt, kann gem. einer weiteren Ausführungsform der Transportvorrichtung eine getrennte Zugstange vorgesehen sein, die durch Zugstangenabschnitte (20,21) gebildet ist, die in der aus der linken Hälfte der Fig. 6 erkennbaren Weise bei Nichtgebrauch im Inneren des Transportbehälters (1) in den Halterungskanälen (3a) verstaut werden können. Die Zugstangenabschnitte (20,21) sind in Fig. 7a und 7b ausführlich dargestellt, und es ist zu erkennen, daß sie an ihrem einen Ende Rasteinrichtungen (22,23) aufweisen, die ein teleskopartiges Ineinanderstecken und miteinander Verbinden der beiden Zugstangenabschnitte (20,21) ermöglichen. An den den Rasteinrichtungen (22,23) gegenüberliegenden Enden weisen die Zugstangenabschnitte (20,21) jeweilige Griffe (24,25) auf, die unrunde Durchbrechungen (26) aufweisen, wie dies insbesondere an dem freien Ende der Zugstange in Fig 6 zu erkennen ist. In diese unrunden Durchbrechungen können die Abschnitte der Spreizeinrichtungen (15) eingeschoben werden, die an den jeweiligen Halbschalen (1a, 1b) des Transportbehälters ausgebildet sind, wie dies aus Fig. 6 zu erkennen ist, sodaß die aus den Zugstangenabschnitten (20,21) gebildete Zugstange starr an dem Transportbehälter (1) festgelegt ist.

Bei Nichtgebrauch werden die beiden Zugstangenabschnitte (20,21) voneinander getrennt und bei geöffnetem Transportbehälter (1) in der aus der linken Hälfte der Fig. 6 ersichtlichen Weise in die Halterungskanäle derart eingelegt, daß die unrunde Durchbrechung (26) der Handgriffe (24,25) auf die Spreizeinrichtungen (15) aufgeschoben werden, um eine sichere Halterung der Zugstangenabschnitte (20,21) in den Halterungskanälen (3a) bei geschlossenem Transportbehälter zu bewirken.

Für die Ausgestaltung der Rasteinrichtungen (22,23) sind dem Fachmann viele Möglichkeiten bekannt, wobei eine Möglichkeit in der Ausgestaltung dieser teleskopartigen Rasteinrichtungen nach der Art besteht, wie sie bei Staubsaugerrohren üblich ist und wie dies in den Fig. 7a und 7b dargestellt ist.

Um das Erfassen der Zugstange zu erleichtern, sind die Griffe (24,25) weiterhin mit einer sich senkrecht zu der unrunden Durchbrechung (26) erstreckenden Aussparung (27) versehen, so daß die Griffe einen Holm (28) bilden, der leicht mit der Hand erfaßt werden kann.

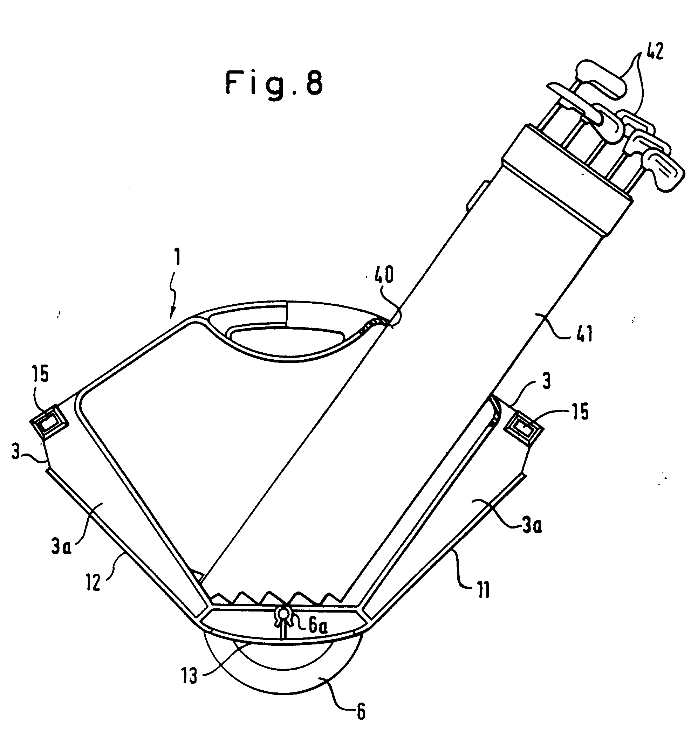

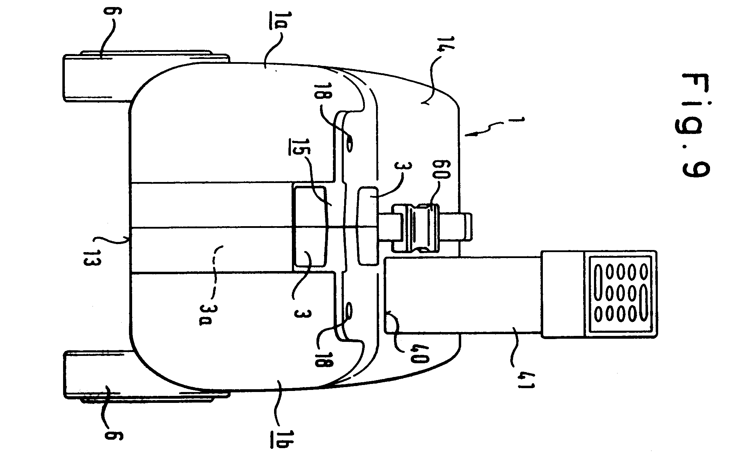

Wenn eine vorgegebene Sportausrüstung eine größere Anzahl von langgestreckten Ausrüstungsteilen umfaßt, die nicht alle in den Halterungskanälen (3a) des Transportbehälters (1) Platz finden, so können diese Ausrüstungsteile in speziellen Haltevorrichtungen angeordnet werden, wie dies für das Beispiel von Golfschlägern in den Fig. 8 und 9 dargestellt ist.

Wie insbesondere aus Fig. 3 zu erkennen ist, sind in der Deckfläche (14) des Transportbehälters in das Innere dieses Transportbehälters mündende Öffnungen (40) vorgesehen, die durch Klappen (50) verschließbar sind. Nach dem Enfernen einer Klappe können in diese Öffnungen Haltevorrichtungen (41) eingesetzt werden, beispielsweise ein Köcher zur Aufnahme der Gölfschläger (42). Dieser Köcher weist an seinem oberen Ende eine Kappe auf, in der Öfnnungen unterschiedlicher Größe ausgebildet sind, in die die einzelnen Golfschläger (42) einsteckbar sind. Dadurch, daß das untere Ende dieses Köchers (41) benachbart zur Verbindungsfläche (13) abgeschrägt ist, ergeben sich im Inneren dieses Köchers Einsteckkanäle unterschiedlicher Länge, die eine Anpassung an die unterschiedlichen Längen der Golfschläger (42) ermöglichen.

In diese Öffnungen (40) können auch kleine Behälter oder flache Wannen zur Aufnahme von Kleinteilen, wie zum Beispiel Schlüsseln, Geldbörsen und dergleichen eingesetzt werden, die dann ebenfalls durch die Klappen (50) verschließbar sind.

Wie dies aus der linken Hälfte der Fig. 3 zu erkennen ist können diese Klappen (50) gleichzeitig durch Verschlußschieber (60) verschlossen werden, die zum Verschließen des Transportbehälters (1) dienen und über Ansätze (51) der Klappen (50) greifen können. Bei der Ausführungsform nach Fig. 3 ist angenommen, daß die beiden Halbschalen (1a,1b) des Transportbehälters (1) im Bereich der Verbindungsfläche (13) durch Scharniereinrichtungen verbunden sind. Bei einer anderen Ausführungsform können jedoch derartige Scharniereinrichtungen auch im Bereich der Bodenwände (11,12) angeordnet sein.

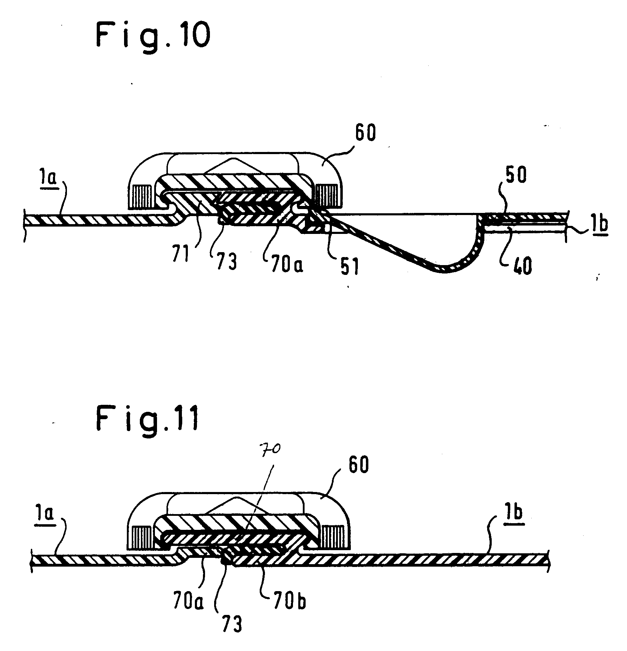

Wie dies aus einem Vergleich der Fig. 3 sowie der Schnittansichten nach den Fig. 10 und 11 zu erkennen ist, weisen die Kanten der beiden Halbschalen (1a,1b) im Bereich der Deckfläche (14) einen Wulstm mit im wesentlichen schwalbenschwanzförmigen Querschnitt auf, auf dem die Verschlußschieber (16) mit einer hierzu komplementären Ausnehmung gleiten. Wie dies aus der Schnittansicht der Fig. 11 zu erkennen ist ist dieser Wulst (70) lediglich an einer der Halbschalen, nämlich der Halbschale (1b) ausgebildet und er übergreift einen Randbereich (70a) der anderen Halbschale (1a) Da der Transportbehälter (1) aufgrund der Gleichheit der beiden Halbschalen um eine vertikale, durch die Radachsen (6a) verlaufende Ebene spiegelsymmetrisch ausgebildet ist ergeben sich im Bereich des in Fig. 3 dargestellten Verschlußschiebers (60) in der linken Hälfte dieser Figur entgegengesetzte Verhältnisse, das heißt die Halbschale (1a) weist einen im Randbereich (70a) der Halbschale (1b) übergreifenden Wulst (70) auf.

Wie dies weiterhin aus der rechten Hälfte der Fig. 3 zu erkennen ist, in der sowohl der Deckel als auch der Verschlußschieber nicht dargestellt sind, um weitere Einzelheiten erkennen zu lassen, weist der Wulst (70) in diesem Bereich eine Aussparung (72) auf, in den ein Vorsprung (71) des Randbereiches greift, wie dies in Fig. 10 dargestellt ist. Wenn der Verschlußschieber oberhalb dieses Vorsprunges (71) angeordnet ist, verbindet er die beiden Halbschalen fest miteinander. In der in der linken Hälfte der Fig. 3 dargestellten Stellung des Verschlußschiebers (60) liegt dieser Verschlußschieber (60) sowohl über dem an dieser Stelle nicht sichtbaren Vorsprung (71), sodaß die beiden Halbschalen (1a,1b) miteinander verriegelt sind, und gleichzeitig liegt ein breiterer Endbereich des Verschlußschiebers (60) über dem Ansatz (51) des Deckels (50), sodaß auch dieser in seiner Lage festgelegt ist. Wenn der Schieber aus der in der linken Hälfte der Fig. 3 dargestellten Position weiter nach rechts verschoben wird so gelangt zunächst der schmalere Mittelbereich des Verschlußschiebers über den Ansatz (51) des Deckels, sodaß dieser Deckel geöffnet werden kann Wird der Verschlußschieber (60) in der linken Hälfte der Fig. 3 noch weiter nach rechts verschoben, so gelangt wieder der linke breitere Endbereich des Verschlußschiebers über den Ansatz (51), sodaß der Deckel verschlossen gehalten wird, während andererseits der Verschlußschieber (60) den Vorsprung (71) nicht mehr überdeckt, sodaß die beiden Halbschalen (1a,1b) geöffnet werden können.

Wie dies weiterhin aus den Fig. 10 und 11 zu erkennen ist, weist die jeweilige, den Wulst (70) tragende Halbschale eine durch den Wulst (70) und einen Innenrand (70b) gebildete Ausnehmung auf, in der eine Dichtung (73) angeordnet ist, die eine verbesserte Abdichtung der beiden Halbschalen bewirkt. Eine derartige Dichtung kann auch umlaufend zwischen allen Kantenbeen der beiden Halbschalen angeordnet sein

## Patentansprüche

1. Transportvorrichtung für Sportausrüstungen mit einem Teile der Sportausrüstung aufnehmenden, auf dem Boden beweglichen Transportbehälter, an dem eine Schub- oder Zugstange und Räder lösbar befestigt sind, **dadurch gekennzeichnet,** daß der Transportbehälter (1) zwei unter einem Winkel von weniger oder gleich 90 Grad gegeneinander geneigte Bodenflächen (11,12) aufweist, die sich quer zu einer in der Bewegungsrichtung liegenden vertikalen Längsmittelebene erstrecken und an ihrem unteren Ende über eine abgerundete Verbindungsfläche (13) miteinander verbunden sind, daß der Transportbehälter entlang seiner Längsmittelebene in zwei im wesentlichen identische Halbschalen (1a,1b) unterteilt ist, die durch Verriegelungseinrichtungen (8) miteinander verbindbar sind und jeweils eine Seitenwand und jeweilige Teilabschnitte der Bodenflächen (11,12), der Verbindungsflächen (13) und einer die Oberseite des Transportbehälters bildenden Deckfläche (14) umfassen, daß in dem Transportbehälter (1) sich im wesentlichen parallel zu einer jeweiligen Bodenwand erstreckende Halterungskanäle (3a) zur Aufnahme eines Endes von langgestreckten Sportausrüstungsteilen (4) ausgebildet sind, und daß die Halterungskanäle (3a) an ihrem oberen Ende in Einstecköffnungen (3) münden, die im Bereich der Deckfläche (14) des Transportbehälters ausgebildet sind.

2. Transportvorrichtung nach Anspruch 1, **dadurch gekennzeichnet,** daß die durch die Verbindungsfläche (13) und/oder die Bodenflächen (11,12) gebildete Unterseite des Transportbehälters (1) eine Gleitkufe bildet.

3. Transportvorrichtung nach einem der Ansprüche 1 oder 2, **dadurch gekennzeichnet,** daß an jeder Halbschale (1a,1b) ein jeweiliges Rad (6) über Rasteinrichtungen (6a) lösbar befestigt ist.

4. Transportvorrichtung nach einem der Ansprüche 1 - 3, **dadurch gekennzeichnet,** daß mindestens einer der Halterungskanäle (3a) ausgehend von der Einstecköffnung (3) in Richtung auf sein unteres Ende in der Längsmittelebene leicht konisch zusammenlaufend ausgebildet ist, daß am oberen Ende des Halterungskanals (3a) oberhalb der Einstecköffnung (3) eine sich quer zur Längsmittelebene erstreckende, langgestreckte stabförmige Spreizeinrichtung (15) zum Auseinanderspreizen von in den Halterungskanal (3a) eingesetzten langgestreckten Sportausrüstungsteilen (4) vorgesehen ist, und daß Paare von Sportausrüstungsteilen an gegenüberliegenden Längskanten der Spreizeinrichtung (15) vorbei in den Halterungskanal (3a) einsteckbar sind.

5. Transportvorrichtung nach Anspruch 4, **dadurch gekennzeichnet,** daß ein Haltegriff (5) vorgesehen ist, der an dem aus dem Transportbehälter (1) herausragenden Teil der langgestreckten Sportausrüstungsteile (4) an einer der Größe des Benutzers angepaßten Stelle befestigbar ist und die Sportausrüstungsteile an ihrem freien Ende gegen die Wirkung der Spreizeinrichtung (15) zusammenzieht, sodaß diese Sportausrüstungsteile nach dem Einstekken in den Transportbehälter (1) die Zug- oder Schubstange für den Transportbehälter bilden.

6. Transportvorrichtung nach Anspruch 1,- **dadurch gekennzeichnet,** daß die Schub- oder Zugstange durch zwei im wesentlichen identische Zugstangenabschnitte (20, 21) gebildet ist, deren eines Ende jeweils Rasteinrichtungen (22,23) zum teleskopartigen Verbinden der beiden Zugstangenabschnitte (20,21) zu einer Zugstange trägt, während das jeweils andere Ende einen Griff (25) trägt, der eine durchgehende unrunde Bohrung (26) aufweist, deren Form und Abmessungen an die Querschnittsform der langgestreckten stabbförmigen Spreizeinrichtungen (15) angepaßt ist, sodaß einer der Griffe (25) auf die Spreizeinrichtung (15) aufschiebbar ist

7. Transportvorrichtung nach Anspruch 6,- **dadurch gekennzeichnet,** daß die Zugstangenabschnitte (20,21) eine der Länge der Halterungskanäle entsprechende Länge aufweisen und in in diese Halterungskanäle (3a) eingestecktem Zustand auf die Spreizeinrichtungen (15) aufsteckbar sind.

8. Transportvorrichtung nach einem der Ansprüche 4 - 7, **dadurch gekennzeichnet,** daß jede Spreizeinrichtung (15) zu ihrem Mittelteil (15a) hin verjüngt ist.

9. Transportvorrichtung nach einem der vorhergehenden Ansprüche, **dadurch gekennzeichnet,** daß die Halbschalen (1a,1b) des Transportbehälter (1) in der Deckfläche (14) in das Innere des Transportbehälters mündende Öffnungen (40) aufweisen, in die auswechselbare Haltevorrichtungen (41) zur Aufnahme von getrennt unterzubringenden Sportausrüstungsteilen (42) und/oder Kleinteilen einsetzbar sind.

10. Transportvorrichtung nach Anspruch 9, **dadurch gekennzeichnet,** daß die Öffnungen (40) durch Klappen (50) verschließbar sind.

11. Transportvorrichtung nach Anspruch 9, **dadurch gekennzeichnet**, daß zumindestens eine der Haltevorrichtungen durch einen Köcher (41) für eolfschläger (42) oder dergleichen gebildet ist.

12. Transportvorrichtung nach einem der vorhergehenden Ansprüche, **dadurch gekennzeichnet,** daß die beiden Halbschalen (1a,1b) entlang einer Kantenfläche gelenkig miteinander verbunden sind, sodaß die beiden Halbschalen aufklappbar sind.

## Claims

1. A transport device for athletic equipment having a transport container which is movable over the ground and receives a part of the athletic equipment, to which container a push or pull rod and wheels are detachably secured, characterized by the fact that the transport container (1) has two bottom surfaces (11, 12) which are inclined to each other at an angle of less than or equal to 90°, said surfaces extending transversely to a vertical longitudinal central plane which lies in the direction of movement and being connected to each other at their lower end by a rounded connecting surface (13); that the transport container is divided along its longitudinal central plane into two substantially identical half shells (1a, 1b) which can be connected to each other by locking means (8), each of which comprise a side wall and corresponding partial sections of the bottom surfaces (11, 12), of the connecting surfaces (13) and of a cover surface (14) which forms the top of the transport container; that holding channels (3a) to receive one end of elongated articles of athletic equipment (4), which channels extend substantially parallel to a corresponding bottom wall, are developed in the transport container (1); and that the holding channels (3a) debouch at their upper end in insertion openings (3) which are formed in the region of the cover surface (14) of the transport container (1).

2. A transport device according to Claim 1, characterized by the fact that the bottom side of the transport container (1) which is formed by the connecting surface (13) and/or the bottom surfaces (11, 12) forms a slide skid.

3. A transport device according to either of Claim 1 and 2, characterized by the fact that a wheel (6) is detachable fastened by detent means (6a) to each half shell (1a, 1b).

4. A transport device according to any of Claims 1 to 3, characterized by the fact that at least one of the holding channels (3a) is developed, extending from the insertion opening (3) in the direction towards its lower end in the longitudinal central plane, in a slightly conically tapering shape; that, at the upper end of the holding channel (3a) above the insertion opening there is an elongated bar-shaped spreading device (15) extending transverse to the longitudinal central plane for the spreading apart of elongated articles of athletic equipment (4) inserted into the holding channel (3a); and that pairs of articles of athletic equipment can be inserted past opposite longitudinal edges of the spreading device (15) into the holding channel (3a).

5. A transport device according to Claim 4, characterized by the fact that a holding handle (5) is provided which can be fastened on the part of the elongated articles of athletic equipment (4) extending out of the transport container (1) at a place adapted to the height of the user and holds the articles of athletic equipment together at their free end against the action of the spreading device (15), so that said articles of athletic equipment after insertion into the transport container (1) form the pull or push rod for the transport container.

6. A transport device according to Claim 1, characterized by the fact that the push or pull rod is formed by two substantially identical pull rod sections (20, 21) one end of which in each case bears detent means (22, 23) for the telescoping connecting of the two pull rod sections (20, 21) to form a single pull rod, while in each case the other end bears a grip (25) which has a non-circular hole (26) which extends through it and the shape and dimensions of which are adapted to the cross-sectional shape of the elongated bar-shaped spreading device (15), so that one of the grips (25) can be pushed over the spreading device (15).

7. A transport device according to Claim 6, characterized by the fact that the pull rod sections (20, 21) have a length corresponding to the length of the holding channels and can be placed over the spreading device (15) in condition inserted into said holding channels (3a).

8. A transport device according to any of Claims 4 to 7, characterized by the fact that each spreading device (15) tapers down towards its central part (15a).

9. A transport device according to any of the preceding claims, characterized by the fact that the half-shells (1a, 1b) of the transport container (1) have openings (40) in the cover surface (14) which debouch into the inside of the transport container and into which replaceable holding devices (41) to receive separately arrangeable articles of athletic equipment (42) and/or small parts can be inserted.

10. A transport device according to Claim 9, characterized by the fact that the openings (40) can be closed by flaps (50).

11. A transport device according to Claim 9, characterized by the fact that at least one of the holding devices is formed by a bag (41) for golf clubs (42) or the like.

12. A transport device according to any of the preceding claims, characterized by the fact that the two half-shells (1a, 1b) are pivotally connected to each other along an edge surface so that the two half-shells are swingable.

**Revendications**

1. Dispositif de transport, pour équipements de sports, avec un conteneur de transport, recevant une partie de l'équipement de sport, mobile au sol, sur lequel sont fixées amovibles une tige de poussée ou de traction et des roues, caractérisé en ce que le conteneur de transport (1) présente deux surfaces de fond (11,12), inclinées l'une par rapport à l'autre sous un certain angle, inférieur ou égal à 90 degrés, qui s'étendent transversalement à un plan médian longitudinal vertical orienté en direction du déplacement et sont reliées ensemble à leur extrémité inférieure par l'intermédiaire d'une surface de liaison (13) arrondie, en ce que le conteneur de transport est subdivisé suivant son plan médian longitudinal en deux demi-coques (1a,1b) pratiquement identiques, susceptibles d'être reliées ensemble au moyen de dispositifs de verrouillage (8) et comprenant chacune une paroi latérale et des sections partielles respectives des surfaces de fond (11,12), des surfaces de liaison (13) et d'une surface de plafond (14) formant la face supérieure du conteneur de transport, en ce que dans le conteneur de transport (1) sont réalisé des canaux de fixation (3a), qui s'étendent sensiblement parallèlement à la paroi de fond respective, en vue de recevoir une extrémité des parties d'équipement de sport (4) allongées, et en ce que les canaux de fixation (3a) débouchent à leur extrémité supérieure dans des ouvertures d'enfichage (3) réalisée dans la zone de la surface de plafond (14) du conteneur de transport.

2. Dispositif de transport selon la revendication 1, caractérisé en ce que la face inférieure, formée par la surface de liaison (13) et/ou les surfaces de fond (11,12), du conteneur de transport (1) forme un patin glissant.

3. Dispositif de transport selon l'une des revendications 1 ou 2, caractérisé en ce que sur chaque demi-coque (1a,1b), une roue (6) respective est fixée amovible par des dispositifs à cliquet (6a).

4. Dispositif de transport selon l'une des revendications 1 à 3, caractérisé en ce qu'au moins l'un des canaux de fixation (3a) est réalisé, en partant de l'ouverture d'enfichage (3), en direction de son extrémité inférieure, de façon à s'effiler de façon légèrement conique dans le plan médian longitudinal, en ce qu'à l'extrémité supérieure du canal de fixation (3a), audessus de l'ouverture d'enfichage (3) est prévu un dispositif d'écartement (15) en forme de barre, allongé, qui s'étend transversalement par rapport au plan médian longitudinal, en vue d'écarter les paries d'équipement de sport (4) allongées insérées dans le canal de fixation (3a), et en ce que des couples de parties d'équipement de sport peuvent être enfichés, en passant les arêtes longitudinales opposées du dispositif d'écartement (15), dans le canal de fixation (3a).

5. Dispositif de transport selon la revendication 4, caractérisé en ce qu'est prévue une poignée (5) de préhension, pouvant être fixée sur la portion des parties d'équipement de sport allongées qui ressort du conteneur de transport (1), en un emplacement adapté à la taille de l'utilisateur, et qui retient groupées les parties d'équipement de sport à leur extrémité libre, contre l'action du dispositif d'écartement (15), de sorte que ces parties d'équipement de sport forment après enfichage dans le conteneur de transport (1) la tige de traction ou de poussée pour le conteneur de transport.

6. Dispositif de transport selon la revendication 1, caractérisé en ce que la tige de poussée ou de traction est formée par deux sections de tige de traction (20,21) sensiblement identiques, dont une première extrémité porte chaque fois des dispositifs à cliquet (22,23), pour relier de façon télescopique les deux sections de tige de traction (20,21) en constituant une seule tige de traction, tandis que la deuxième extrémité porte une prise (25), qui présente un perçage traversant (26) oblong, dont la forme et les dimensions sont adaptées à la forme de la section transversale des dispositifs d'écartement (15) en forme de barre allongés, de sorte que l'une des prises (25) peut être enfichée sur le dispositif d'écartement (15).

7. Dispositif de transport selon la revendication 6, caractérisé en ce que les sections de barre de traction (20,21) présentent une longueur qui correspond à la longueur des canaux de fixation et sont susceptibles d'être enfichées sur les dispositifs d'écartement (15), à l'état enfiché dans ces canaux de fixation (3a).

8. Dispositif de transport selon l'une des revendications 4 à 7, caractérisé en ce que chaque dispositif d'écartement (15) s'effile en sa partie centrale (15a).

9. Dispositif de transport selon l'une des revendications précédentes, caractérisé en ce que les demi-coques (1a,1b) du conteneur de transport (1) présentent dans la surface de plafond (14) des ouvertures (40), qui débouchent à l'intérieur du conteneur de transport, dans lesquelles sont susceptibles d'être insérées des dispositifs interchangeables (41), servant à recevoir des parties d'équipement de transport (42) à loger séparément et/ou de petites pièces.

10. Dispositif de transport selon la revendication 9, caractérisé en ce que les ouvertures (40) sont obturables au moyen de volets (50).

11. Dispositif de transport selon la revendication 9, caractérisé en ce qu'au moins l'un des dispositifs de fixation est formé par un carquois (41) pour clubs de golf (42) ou analogue.

12. Dispositif de transport selon l'une des revendications précédentes, caractérisé en ce que les deux demi-coques (1a,1b) sont reliées ensemble de façon articulée le long d'une surface de bordure, de sorte qu'elles soient rabattables.

Fig.1

# Fig. 2

# Fig.3

**Fig.4**

**Fig.5**

# Fig.6

# Fig.7a

# Fig.7b

EP 0 277 595 B1

# Fig.8

14

# Fig.9

Fig.10

Fig.11